Europäisches Patentamt

European Patent Office

Office européen des brevets

(19)

(11) Publication number: **0 066 632**
**B1**

(12) **EUROPEAN PATENT SPECIFICATION**

(45) Date of publication of patent specification: **08.08.84**

(21) Application number: **82900047.0**

(22) Date of filing: **16.12.81**

(86) International application number:
**PCT/JP81/00388**

(87) International publication number:
**WO 82/01981 24.06.82 Gazette 82/16**

(51) Int. Cl.³: **A 23 L 3/36, H 05 B 6/46,
H 05 B 11/00, F 24 C 7/02**

(54) **MICROWAVE HEAT COOKING DEVICE.**

(30) Priority: **17.12.80 JP 179432/80
09.02.81 JP 18750/81**

(43) Date of publication of application:
**15.12.82 Bulletin 82/50**

(45) Publication of the grant of the patent:
**08.08.84 Bulletin 84/32**

(84) Designated Contracting States:
**DE GB SE**

(56) References cited:
**DE - A - 2 422 530
DE - B - 1 148 676
GB - A - 621 320
JP - A - 48 094 932
JP - A - 50 124 243
JP - A - 52 044 436
JP - U - 48 030 843
JP - U - 50 017 844
US - A - 2 592 691
US - A - 3 056 877**

(73) Proprietor: **Matsushita Electric Industrial Co., Ltd.
1006, Oaza Kadoma
Kadoma-shi Osaka-fu, 571 (JP)**

(72) Inventor: **TANAKA, Junzo
1-37, Emisaka 1-chome Fujiidera-shi
Osaka-fu 583 (JP)**
Inventor: **TERASAKI, Hiroshi
651-10, Hiramatsu-cho
Nara-shi Nara-ken 631 (JP)**
Inventor: **KUSUNOKI, Shigeru
89-4, Yatayama-cho
Yamatokoriyama-shi Nara-ken 639-11 (JP)**

(74) Representative: **Crawford, Andrew Birkby et al,
A.A. THORNTON & CO. Northumberland House
303-306 High Holborn
London WC1V 7LE (GB)**

Courier Press, Leamington Spa, England.

## Description

TECHNICAL FIELD

This invention relates to a high frequency cooking appliance comprising means for emitting high frequency waves into a heating chamber to dielectrically heat a heating load, and defrosting means constituted of parallel plate electrodes removably installed in the heating chamber and adapted to hold a defrosting load therebetween in defrosting operation and apply high frequency waves in the 10 MHz band to effect defrosting, the use of said two means ensuring that chilled food can be defrosted and cooked without detracting from its taste and freshness.

BACKGROUND ART

For defrosting loads in a short time, it has been usual practice to use a microwave oven for small thin loads and, for thick loads, to hold such load between parallel plate electrodes and apply short waves of the order of 13 MHz thereto while cooling the periphery of the load with cool air. This is because microwave ovens are effective in defrosting only small thin loads since the wavelength is too short to penetrate into the center of the load, defrosting only the surface. Application of short waves using parallel plate electrodes is effective in uniformly defrosting a load, but when the surface of the defrosting load becomes wet, a conduction current flows to weaken the internal electric field, producing a tempeature difference between the surface and the interior which results in boiling the surface, which accounts for the fact that defrosting has heretofore been effected while cooling the surface with cool air. However, it is difficult to effect defrosting while preserving the taste and freshness. Further, the appliance is very large and expensive, so that at present it is not in practical use except those on the market intended for business use.

DISCLOSURE OF THE INVENTION

Accordingly, the invention provides a small-sized inexpensive high frequency cooking appliance which incorporates the respective merits of a microwave oven and a defroster using short waves, enabling both defrosting and cooking to be effected with a single heating chamber.

The invention will now be described with reference to the accompanying drawings showing embodiments thereof.

BRIEF DESCRIPTION OF THE DRAWINGS

Fig. 1 is a side view, in section, of a high frequency cooking appliance showing an embodiment of the invention;

Fig. 2 is an electric circuit diagram for said appliance;

Fig. 3 is a control circuit diagram for the principal portion of said appliance;

Fig. 4 is a perspective view of said appliance with its door opened;

Fig. 5 is a perspective view showing the relation between a timer knob and cams in said cooking appliance;

Fig. 6 is a view showing the relation between the cam and a switch;

Fig. 7 is a perspective view, partly broken away, of a defroster installed in said cooking appliance;

Fig. 8 is a perspective view of a defroster according to another embodiment of the invention;

Fig. 9 is a perspective view of a lower electrode in the principal portion of said defroster;

Fig. 10 is a circuit diagram for an oscillator; and

Fig. 11 is a concrete circuit diagram for said oscillator.

BEST MODE OF CARRYING OUT THE INVENTION

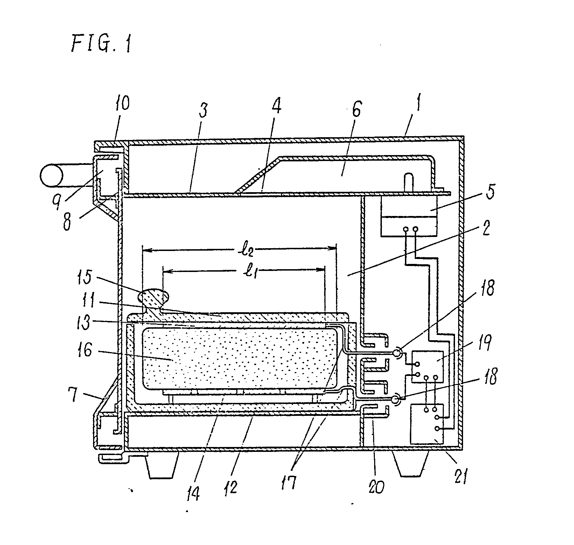

Fig. 1 is a side view, in section of an embodiment of the invention. A heating chamber 2 is provided in a body 1, and the upper wall surface 3 of the heating chamber 2 is formed with electricity supply port 4, through which high frequency waves produced by a magnetron 5, which is a high frequency wave generator, are directed into the heating chamber 2 via a waveguide 6. The front opening in the heating chamber 2 is fitted with a door 7 provided with a capacitive choke 8, a choke groove 9 and an electric wave absorber 10 for preventing leakage of electric waves. The above arrangement for a microwave oven is the same as in a conventional cooking appliance, but it is provided with a parallel plate electrode section removably installed on the bottom wall of the heating chamber 2. More particularly, there is installed a container 12 with a lid 11, made of dielectric material. The lid 11 is provided with an upper electrode 13 and the container 12 with a lower electrode 14. The lid 11 is provided with a grip 15 for putting in and out defrosting loads. The upper and lower electrodes 13 and 14 are connected to terminals 18 by lead wires 17 and then to an oscillator 19 in the 10 MHz band. Since the terminals 18 extend through the heating chamber wall, the outer wall surface of the heating chamber is provided with choke grooves 20 for preventing leakage of electric waves.

In addition, said magnetron 5 and oscillator 19 are connected to a power device 21. The power device 21 is constituted of various safety devices, a timing device, a control device 20 for controlling the magnetron 5 and oscillator 19, and a power circuit 23.

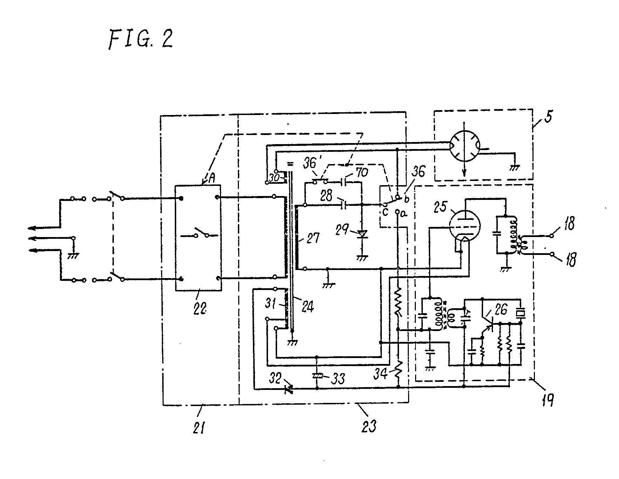

First, the power circuit 23 shown in Fig. 2 will be described. The numeral 24 denotes a power transformer for supplying proper power to the magnetron 5, a power amplifier tube 25, to be later described, for amplification of high frequency waves in the 10 MHz from the oscillator 19, and an oscillation circuit 26. The power transformer 24 is of the leakage magnetic flux type so as to have the characteristics of a constant voltage power source in combination with a capacitor 28 for double-voltage rectification and a capacitor to be later described. The numeral 29 denotes a diode for rectifying the anode powers for the magnetron 5 and power amplifier tube 25. The numeral 30 denotes the output winding of the power transformer 24, which supplies heater power to the magnetron 5 during the operation of the appliance. The numeral 31 denotes an output winding for supplying heater power for the power amplifier tube 25 and power for bias setting, the winding output for bias setting being smoothed by a diode 32 and a capacitor 33 and then set to an optimum voltage by resistors 34 and 35 (in this embodiment, to enable the power amplifier tube 25 to operate in Class C, the resistors 34 and 35 are provided for application of a reverse voltage higher than the cutoff voltage of the power amplifier tube 25), so that the resulting DC voltage can be applied to the control grid of the power amplifier tube 25. The circuit is arranged so that the heater power can be likewise applied during the operation of the appliance.

Further, the winding 31 also supplies power to the oscillator 26 in the 10 MHz band by being rectified and smoothed by the diode 32 and capacitor 33.

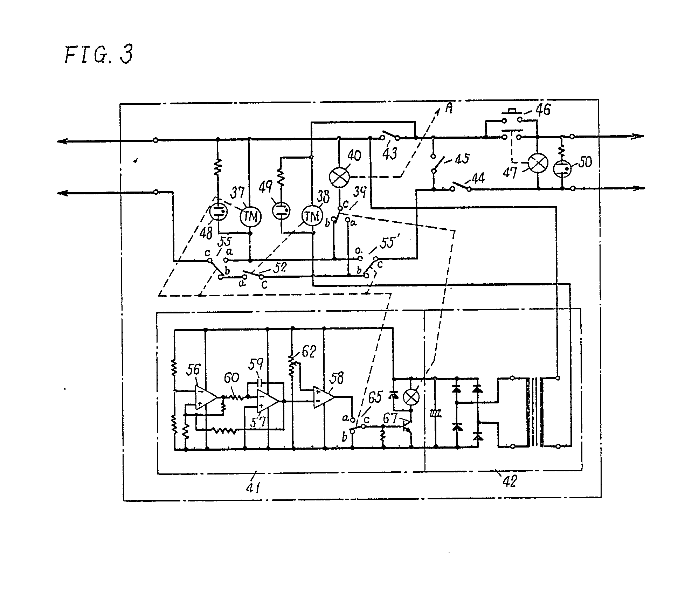

The rectified output from the secondary winding 27 of the power transformer 24 is connected to the common terminal (c terminal) of a changeover switch 36 to whose a and b terminals are connected lead wires at their respective one end which are connected to the cathodes of the magnetron 5 and power amplifier tube 25. In addition, the changeover switch 36 is a relay contact provided in the control device 22. This control device 22 will now be described with reference to Fig. 3. The circuit arrangement comprises timers 37 and 38 for setting the heating time, a driving coil 40 for the changeover switch 36 with a switching relay 39 connected to the coil, an interrupter 41 for driving the switching relay 39, a power circuit B 42 associated with the operation of the interrupter 41, oscillation stopping devices A 43, B 44 and C 45 for stopping the oscillation of the oscillator 19 and magnetron 5 when the door 7 is opened, a start switch 46 for starting oscillation, a relay 47 for holding start signals, display lamps A 48 and B 49 for displaying the operation of the respective timers, and a display lamp C 50 for displaying oscillation.

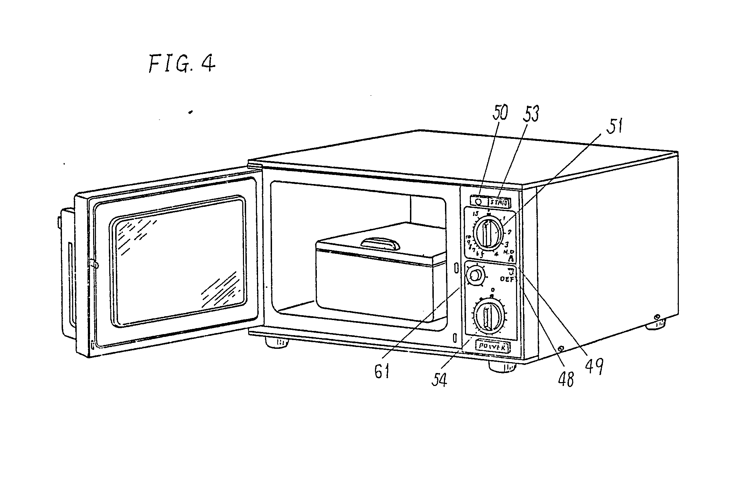

Referring to Fig. 4, when a timer knob 51 is turned, the contact 52 of the timer 38 is closed. And the display lamp B 49 is lit, and when the door is closed and a start button 53 associated with the operation of the start switch 46 is pressed, a voltage is applied to the power transformer 24 and concurrently the relay 47 holds itself, so that even if the operator removes his hand, the power transformer 24 remains energized and the display lamp C 50 is lit to indicate that oscillation is going on. Where said switching relay 39 has no current passing through the coil, the b and c contacts are connected together, and since the b contact is connected to the coil of the timer 37, no voltage is applied to the coil 40 of the changeover switch 36. Thus, the changeover switch 36 (Fig. 2) has its c terminal and b contact connected together. Since the b contact is connected to the cathode of the magnetron 5, in this state the magnetron 5 emits high frequency waves into the heating chamber 2.

On the other hand, with the timer 38 turned off, if the timer knob 54 is turned clockwise to turn on the timer 37, the contacts 55 and 55' are connected to the a side and no voltage is applied to the timer 38. And the display lamp A 48 is lit, and when the door 7 is closed and the start button 53 is pressed, the secondary winding 27 of the power transformer 24 likewise produces voltage, but the coil 40 of the changeover switch 36 is energized, so that the changeover switch 36 in Fig. 2 has its c terminal and a contact connected together. The a contact is connected to the cathode of the high frequency power amplifier tube 25, so that the power amplifier tube 25 operates. During this time, of course, the magnetron 5 connected to the b contact does not operate. During this time, the high frequency waves produced by the oscillator 26 in the 10 MHz band are amplified, and amplified high frequency waves in the 10 MHz band are induced in the terminal 18. If the two timer knobs 51 and 54 are turned clockwise at the sames time, the contacts 55 and 55' are connected to the a side, so that the timer 37 is turned on, inducing high frequency waves in the 10 MHz in the terminal 18. Voltage is applied to the timer 37 and when the knob 54 is turned to 0 by the motor after the lapse of the time corresponding to the angle of rotation of the knob 54, the contacts 55 and 55' are connected at b and c to put off the voltage on the timer 37 and concurrently apply voltage to the timer 38. At this instant, the applied voltage on the coil 40 of the changeover switch 36 becomes 0, the changeover switch 36 having its c terminal and b contact connected together. As a result, whereas high frequency waves in the 10 MHz band have been induced in the terminal 18 up to this point of time, the magnetron 5 comes to emit high frequency waves into the heating chamber 2. Thus, with this circuit arrangement, high frequency waves in the 10 MHz band are emitted into the heating chamber for the time set by the timer 37 and subsequently the high frequency waves from the magnetron 5 are automatically emitted into the heating chamber for the time set by the timer 38.

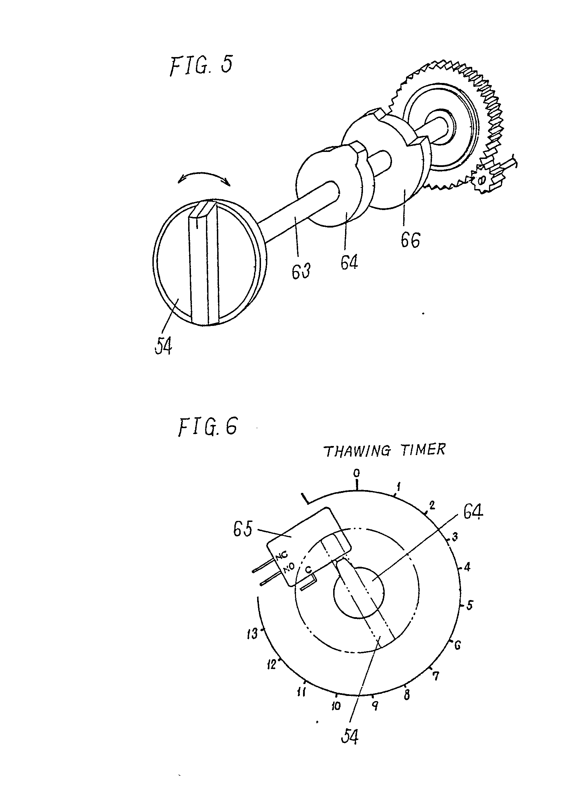

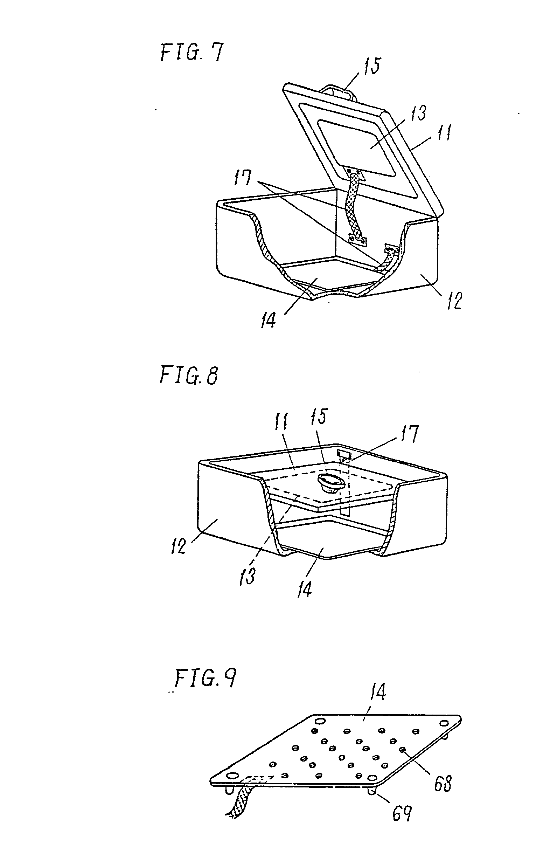

The arrangement and operation of the interrupter 41 will now be described. The numerals 56, 57 and 58 denote operational amplifiers, the 56 and 57 being for generation of sawtooth waves. The repetition period is set at about 20 sec by suitably selecting the values of a capacitor 59 and resistor 60. The sawtooth waves are applied to the invention input terminal of the operational amplifier 58. The non-inversion input terminal of the operational amplifier 58 is connected to the slide terminal of a variable resistor 62 adapted to have its set position determined by turning a knob 61. The fixed ends of the variable resistor 62 are connected to the opposite ends of the power circuit B 42, and the voltage on the non-inversion input terminal of the operational amplifier 48 is one in the voltage range between the opposite ends of the power circuit B 42 which is determined by the set position of a knob 61. The peak-to-peak voltage of the output (sawtooth waveform) from the operational amplifier 57 is approximately equal to the voltage of the power circuit B 42, and with this arrangement, the output from the operational amplifier 58 is approximately equal to the negative voltage on the power circuit B 42 during the time the instantaneous voltage of sawtooth waveform is lower than the non-inversion input voltage determined by the position of the variable resistor 62, and in the reverse case it becomes equal to the positive voltage. With this arrangement, the output from the operational amplifier 58 of the interrupter 41 is maintained approximately equal to the positive voltage for a portion of the period of 20 sec which is determined by the set position of the slider of the variable resistor 62. This voltage is connected to the a contact of a switch 65 operable by a cam 64 mounted on a shaft 63 to which the knob 54 of the timer 37 is fastened, as shown in Fig. 5. The b contact of the switch 65 is connected to the negative pole of the power circuit B 42. The cam 64 is provided with a projection at a position where a cam 66 associated with the operation of the contacts 55 and 55' of the switch 65 connects the contacts 55 and 55' to the b contact, i.e., a position shifted about 30° in a clockwise direction as viewed from the knob 54 from the position where the knob 54 of Fig. 4 indicates the 0 position. The cam 66 is recessed so that the switches 55 and 55' may be connected to the b contact side during an interval of 45° to the left from said 0 position. As a result, when the knob 54 of the timer 37 is turned 30° counterclockwise, the contact 55 and 55' are connected to the b contact side, making the timer 38 operable, and the switch 65 is connected to the a contact or b contact. This state is schematically shown in Fig. 6. And the common terminal (c terminal) of the switch 65 is connected to the base of a transformer 67, and its collector is connected to the coil of the switching relay 39. With the above arrangement, the contacts of the switching relay 39 will be connected to the a side for a portion of the period of about 20 sec which is determined by the angle of rotation of the knob 61 of the variable resistor 62 when the knob 54 of the timer 37 is turned 30 degrees counterclockwise from the 0 position. According to the description given above, when the timer 38 is turned, the a contact and c terminal of the contact set 52 are connected together to generate high frequency waves. In this case, the contacts of the switching relay 39 are connected to the b contact side, but, as described above, only when the knob 54 is turned 30 degrees counterclockwise, the changeover switch 36 shown in Fig. 2 is connected to the a contact and c terminal for a portion of the period of 20 sec which is determined by the angle of rotation of the knob 61, with the result that high frequency waves from the magnetron 5 and high frequency waves in the 10 MHz band will be alternately and repeatedly applied to the heating chamber with a period of about 20 sec. The above is an outline of the arrangement of the power device 21.

The parallel flat plate electrode section removably installed in the heating chamber 2 will now be described. Figs. 7 and 8 each show an embodiment. Fig. 7 is a perspective view of part of the arrangement described above, like parts being marked with like numerals. Fig. 8 shows an embodiment constructed so that the position (height) of the lid, i.e., electrode spacing can be freely changed according to the size of a defrosting load.

The outer size of the lid 11 is smaller than the inner size of the container 12 so that it can be freely moved vertically.

Further, the lower electrode 14 is arranged in the manner shown in Fig. 9. The lower electrode 14 is formed with a number of small holes 68 having little influence on high frequency waves and its surface which does not contact defrosting loads is provided with legs 69 at the four corners. One of the sides defining the contour is provided with a lead wire 17.

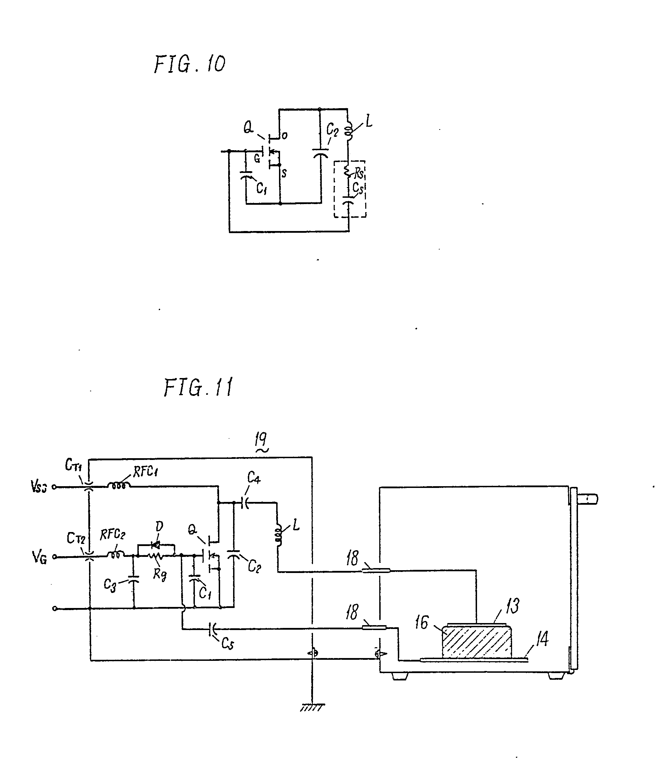

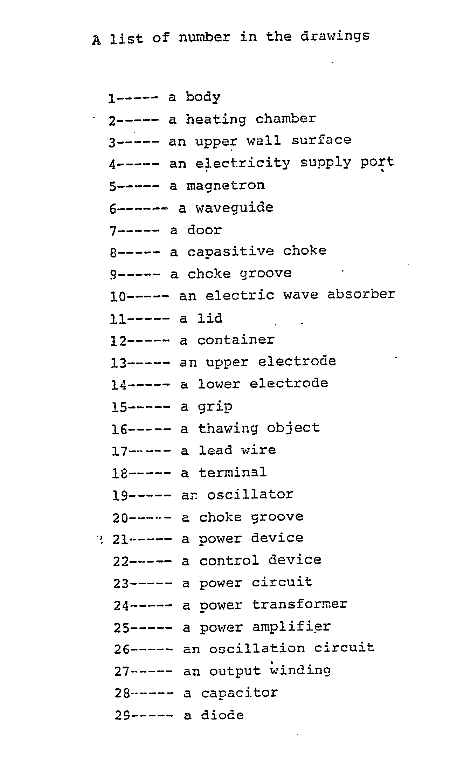

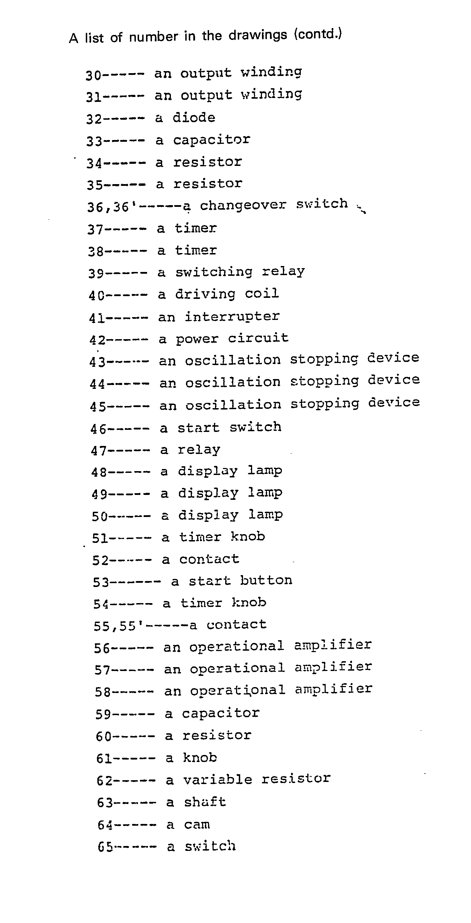

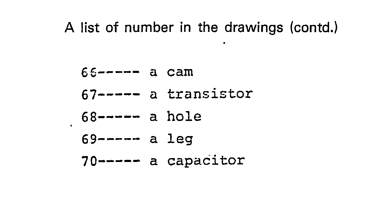

Another embodiment of oscillator 19 will now be described. Figs. 10 and 11 show concrete circuits therefor.

Fig. 10 shows an example of a high frequency circuit equivalent to a circuit using a field-effect transistor Q (FET) as an active element. It shows a CLAP type oscillation circuit using capacitors $C_1$, $C_2$, $C_s$, inductance L, and resistor $R_s$. In this type of oscillation circuits, the capacitances between the parasitic capacitance gate G and the source S and between the drain D and the source S, which the transistor Q possesses inherently as an element, function together with exterior installation capacitances $C_1$ and $C_2$ as circuit parameters; thus, the oscillation circuit is stable as compared with the Hartley type.

Further, the defrosting load can be regarded as a series connection of a series resistance $R_2$ and a series capacitance $C_s$ in terms of high frequency waves. Though varying with design conditions, typical food in the chilled state has, in the 10 MHz band, $R_s = 5—300 \Omega$ and

$C_s = 50—100$ (PF). As is clear from the above description, in this embodiment, a heating load is placed in a portion free of the inductance in the series connection of L, $R_s$ and $C_s$.

Fig. 11 show a concrete example of the arrangement of Fig. 10. The transistor Q, capacitances $C_1$ and $C_2$ and inductance L, which are the parts of the oscillation device 19, correspond to the respective elements of Fig. 3. As for the series resistance $R_s$ and series capacitance $C_s$, a defrosting load 16 is held between the electrode plates 13 and 14. In addition, 18 corresponds to the terminals in Fig. 1.

In Fig. 11, choke coils $RFC_1$ and $RFC_2$ and through-type capacitors $T_1$ and $T_2$ are used for prevention of transfer of high frequency electric waves to the external power lines. A capacitance $C_3$ is intended for anti-noise. A diode D and resistance $R_G$ are for self-rectification purposes, providing a protective function in connection with the gate-source voltage withstanding limit for the transistor Q.

Numerical values for a typical design example are given below.

Applied voltage $V_{ss} = 100—140$ V; gate voltage $V_G = 10—15$ V; capacitances $C_{T1}$, $C_{T2}$, $C_3$, $C_4$ are each 4,700 PF; $C_1 = 4,200$ PF; $C_2$ PF; and $R_G = 5—10$ KΩ.

In the above case, with the changeover switch 36 used alone, it is impossible to effect switching between high frequency waves in the 10 MHz band and high frequency waves from the magnetron. Though not illustrated, in this case a separate power circuit is used to produce voltages $V_{ss}$ and $V_G$ and there is provided a separate switch for applying these two voltages only when the changeover switch 36 connects to the a contact.

The changeover switch 36 in this embodiment is provided with a changeover switch 36' for the concurrent switching of the rectified output voltage from the secondary winding 27 of the power transformer 24. The changeover switch 36' is used to intermittently turn on and off a capacitor 70 connected in parallel with the capacitor 28. In the on state, both of the capacitors 28 and 70 are charged with the output from the secondary winding 27, thus providing greater power, while in the off state, the output from the secondary winding a charges only the capacitor 28; thus, it supplies the load with less power than in the former case. In this embodiment, it is so arranged that the on state is established when the changeover switch 36' is connected to the magnetron 5 and that the off state is established when it is connected to the power amplifier tube 25, so as to follow the specifications of the parts used and obtain the necessary performance. By setting the capacitance of this capacitor at various values, the magnetron 5 and power amplifier tube 25 can be such that they are convenient for use. It goes without saying that if the magnetron 5 and power amplifier tube 25 have the same voltage applied between their anode and cathode, this circuit is unnecessary.

As is apparent from the description given so far, this invention is so arranged that a defroster, having parallel plate electrodes adapted to have short waves in the 10 MHz band applied thereto can be removably installed in the heating chamber of a conventional microwave oven, thereby producing the following results.

(1) It can be used as a microwave oven and thick loads can be defrosted with ease.

(2) As compared with the use of separate heating chambers, the use of a single heating chamber and a single door is sufficient for the purpose and electric wave leakage preventing devices such as capacitive seals and electric wave absorbers are effective for both, thus effecting considerable economy and requiring a small space for installation.

(3) Since the dimension $l_1$ of the parallel plate electrodes 13 and 14 is smaller than the dimension $l_2$ of the defrosting load 16, only the center portion of the defrosting load (which corresponds to the parallel plate electrodes) is defrosted by short waves. In this case, since there is no outflow of fluid from the thin ice layer on the surface of chilled food for drying and oxidation prevention or from within the food, there is no possibility of the surface getting wet and hence no conduction current, so that the center portion can be uniformly defrosted. When the magnetron is activated subsequently to the defrosting of the center portion by short waves, the parallel electrode plates reflect the high frequency waves, so that only the periphery of the defrosting load can be defrosted. Thus, the combination of short waves from the parallel electrode plates and high frequency waves is effective in achieving defrosting by a small and compact appliance.

(4) With the control device associated with the stoppage of operation of the oscillator for producing high frequency waves in the 10 MHz band, high frequency waves are automatically generated, whereby even large loads can be defrosted quickly and easily.

(5) Application of high frequency waves from the magnetron to the control device at constant time intervals during defrosting with high frequency waves in the 10 MHz band enables thick load to be defrosted. According to this invention, the provision of parallel flat plate electrodes on the regions of a defrosting load which are liable to be overheated by high frequency waves during application of the latter, i.e., the surface portions, weakens the high frequency electric field (which is 0 on the metal surface, with little defrosting taking place) and forms a mode of high frequency electric field between the parallel flat plates. With the electrode size and spacing properly set, when high frequency electric field is applied in this mode, the electric field in the center portion of the defrosting load is strengthened, enabling the interior of the defrosting load to be defrosted.

When defrosting is performed with short waves applied between the parallel flat plate electrodes, it follows that defrosting energy from short waves of relatively great wavelength is applied where the load surface remains almost non-defrosted and the interior is defrosted by high frequency waves, with the result that even thick defrosting loads can be uniformly defrosted without the surface boiling. Further, as compared with the conventional arrangement in which the surface is deliberately cooled during defrosting, the defrosting time can be shortened by the amount corresponding to the absence of cooling of the outer peripheral portion in addition to application of high frequency energy, thus saving energy at least by the amount corresponding to making unnecessary the external application of cool air or the like. It is the embodiments of this invention that have carried out the above. These embodiments are arranged so that high frequency waves and short waves are applied within a given period of time in such a manner than only either type is applied at any moment according to a schedule determining which electric wave is to be applied in what proportion.

Therefore, the carry-over heating effect of high frequency waves, i.e., the effect of heat being conducted to the surroundings during absence of high frequency waves, in contrast to continuous application of high frequency waves, can be added to provide increased efficiency. Moreover, this effect suppresses the localized heating phenomenon peculiar to dielectric heating, providing more uniform defrosting.

(6) The use of the system for switching the power source to activate only either one, of course, has made it possible to provide a lightweight and compact appliance, which is the intended object. Of the components of this type of appliance, the cool air generator which takes up the largest space and is very heavy is dispersed with and only a single power transformer suffices. As a result, problems about installation space and transportation have been eliminated and production cost has been greatly reduced.

(7) As a result of the use of a single power transformer and continuous application of heater power to the magnetron and power amplifier tube, switching can be instantaneously effected and the period of heating time taken by the dielectric heating device, which attaches importance to the shortness of such time, had been greatly reduced. During the rise time of the magnetron or power amplifier tube (the time required for the heater to be sufficiently heated to produce sufficient output), heating or defrosting is not sufficiently effected, and for about 10 sec out of 20 sec the energy which can be applied to a defrosting load for a given period of time is greatly decreased, so that the defrosting time required becomes very long.

Further, if voltage is applied to the anode during the rise time of the heater, this would greatly decrease the life of the magnetron or power amplifier tube. During this time, the magnetron would produce abnormal oscillation, subjecting the peripheral components to the adverse influence of spurious radiation. This invention has eliminated these problems and greatly increased reliability.

(8) The semiconductor version of 10 MHz band oscillator has made the appliance lightweight and compact and increased its life. Further, there is no need for heater power, contributing largely to energy saving.

(9) Since the parallel flat plate electrode section is removably installed in the body, the appliance is easy to clean and convenient to use.

(10) The provision of a number of small holes in the lower electrode in the parallel flat plate electrode section allows the defrosted water layer to pass therethrough to collect in the bottom of the container. This decreases the possibility of conduction current flowing on the surface and increases defrosting efficiency. At the same time, it is possible to minimize unevenness of defrosting due to the difference in dielectric loss between the water layer portion and the portion which becomes water. Further, the use of a vacuum tube for power amplification makes it possible to extract short waves of high power by a simple method. In the case of semi-conductors, when the junction is enlarged to provide for high power, the barrier capacitance in the junction increases, thus decreasing the amplification factor. That is, efficiency decreases. Further, defrosting loads having various shapes mean that when the load on the power amplifier tube is considered, the impedance varies. With semi-conductors it is generally considered more difficult to enlarge the safety operating region than with vacuum tubes. The power amplifier tube in the form of a vacuum tube in this type of appliance in which the operating point varies has been successful in withstanding severe operating conditions.

In the above embodiment, a vacuum tube was used as the power amplifier tube.

INDUSTRIAL APPLICABILITY

As is clear from the description given so far, this invention combines the respective merits of a microwave oven and a defrosting method applying short waves to parallel electrode plates, so as to provide a small-sized defroster requiring no device for applying cool air. Thus, it is highly beneficial.

Further, it is capable of satisfactory defrosting and cooking without detracting from the taste and freshness of food to be defrosted.

**Claims**

1. A high frequency cooking appliance comprising a heating chamber in a body, a high frequency generator for emitting high frequency waves into said heating chamber, and a high frequency oscillator adapted to be removably installed in said heating chamber and having parallel plate electrodes for holding a defrosting load therebetween, said oscillator applying high frequency waves to said parallel plate electrodes.

2. A high frequency cooking appliance as set forth in Claim 1, wherein said parallel plate electrodes are smaller than the defrosting load.

3. A high frequency cooking appliance as set forth in Claim 1, including a timing device A for determining the operation time for said high frequency wave generator, and a timing device B for determining the operation time for said high frequency oscillator, the arrangement being such that the timing device A operates in association with the stoppage of operation of said timing device B.

4. A high frequency cooking appliance as set forth in Claim 1, wherein the high frequency wave generator and high frequency oscillator and alternately operated according to a time ratio set by an external operation.

5. A high frequency cooking appliance as set forth in Claim 1, wherein a power transformer for driving said high frequency wave generator and high frequency oscillator has at least part of its windings used in common.

6. A high frequency cooking appliance as set forth in Claim 1, wherein the spacing between said parallel plate electrodes is variable according to the size of the heating load.

7. A high frequency cooking appliance as set forth in Claim 1, wherein of the parallel plate electrodes, the lower one is formed with a plurality of small holes.

### Patentansprüche

1. Hochfrequenz-Kochvorrichtung mit einer Erhitzungskammer in einem Körper, einem Hochfrequenzgenerator zum Aussenden von Hochfrequenzwellen in die Erhitzungskammer und einem Hochfrequenzoszillator, der geeignet ist, entfernbar in der Erhitzungskammer installiert zu werden und der parallele Plattenelektroden zum Halten einer aufzutauenden Last zwischen ihnen besitzt, wobei der Oszillator Hochfrequenzwellen an die parallelen Plattenelektroden anlegt.

2. Hochfrequenz-Kochvorrichtung nach Anspruch 1, bei der die parallelen Plattenelekroden kleiner als die aufzutauende Last sind.

3. Hochfrequenz-Kochvorrichtung nach Anspruch 1, mit einer Zeitgabevorrichtung A zum Bestimmen der Arbeitszeit für den Hochfrequenz-Wellengenerator und einer Zeitgabevorrichtung B zum Bestimmen der Arbeitszeit für den Hochfrequenzoszillator, wobei die Anordnung derart getroffen ist, daß die Zeitgabevorrichtung A in Zuordnung zur Beendigung des Arbeitens der Zeitgabevorrichtung B arbeitet.

4. Hochfrequenz-Kochvorrichtung nach Anspruch 1, bei der der Hochfrequenz-Wellengenerator und der Hochfrequenzoszillator abwechselnd gemäß einem durch externe Betätigung eingestellten Zeitverhältnis betrieben werden.

5. Hochfrequenz-Kochvorrichtung nach Anspruch 1, bei der ein Leistungstransformator zum Erregen des Hochfrequenz-Wellengenerators und des Hochfrequenzoszillators zumindest einen Teil seiner Wicklungen gemeinsam verwendet.

6. Hochfrequenz-Kochvorrichtung nach Anspruch 1, bei der der Abstand zwischen den parallelen Plattenelektroden gemäß der Größe der Erhitzungslast veränderbar ist.

7. Hochfrequenz-Kochvorrichtung nach Anspruch 1, bei der die untere der parallelen Plattenelektroden mit einer Vielzahl von kleinen Löchern versehen ist.

### Revendications

1. Appareil ménager de cuisson par haute fréquence comprenant une chambre de chauffage dans un corps, un générateur de haute fréquence servant à émettre des ondes de haute fréquence dans ladite chambre de chauffage, et un oscillateur de haute fréquence conçu pour être installé de manière amovible dans ladite chambre de chauffage et possédant des électrodes en plaques parallèles pour maintenir entre elles un charge de décongélation, ledit oscillateur appliquant des ondes de haute fréquence auxdites électrodes en plaques parallèles.

2. Appareil ménager de cuisson par haute fréquence selon la revendication 1, où lesdites électrodes en plaques parallèles sont plus petites que la charge de décongélation.

3. Appareil ménager de cuisson par haute fréquence selon la revendication 1, comportant un dispositif minuteur A servant à déterminer la durée de fonctionnement dudit générateur d'ondes de haute fréquence, et un dispositif minuteur B servant à déterminer la durée de fonctionnement dudit oscillateur de haute fréquence, l'ensemble étant tel que le dispositif minuteur A fonctionne en association avec l'arrêt du fonctionnement dudit dispositif minuteur B.

4. Appareil ménager de cuisson par haute fréquence selon la revendication 1, où ledit générateur d'ondes de haute fréquence et l'oscillateur de haute fréquence fonctionnent en alternance selon un rapport temporel fixé par une action extérieure.

5. Appareil ménager de cuisson par haute fréquence selon la revendication 1, où un transformateur de puissance servant à commander lesdites générateur d'ondes de haute fréquence et oscillateur de haute fréquence possède au moins une partie de ses enroulements utilisée en commun.

6. Appareil ménager de cuisson par haute fréquence selon la revendication 1, où l'écartement entre lesdites électrodes en plaques parallèles est variable en fonction de la taille de la charge de chauffage.

7. Appareil ménager de cuisson par haute fréquence selon la revendication 1, où, dans les électrodes en plaques parallèles, la plus basse est dotée de plusieurs petits trous.

FIG. 1

FIG. 2

FIG. 3

FIG. 4

*FIG. 5*

54 · 63 · 64 · 66

*FIG. 6*

THAWING TIMER

65 · 64 · 54

FIG. 7

FIG. 8

FIG. 9

FIG.10

FIG.11

**0 066 632**

A list of number in the drawings

1----- a body
2----- a heating chamber
3----- an upper wall surface
4----- an electricity supply port
5----- a magnetron
6------ a waveguide
7----- a door
8----- a capasitive choke
9----- a choke groove
10----- an electric wave absorber
11----- a lid
12----- a container
13----- an upper electrode
14----- a lower electrode
15----- a grip
16----- a thawing object
17----- a lead wire
18----- a terminal
19----- an oscillator
20----- a choke groove
21----- a power device
22----- a control device
23----- a power circuit
24----- a power transformer
25----- a power amplifier
26----- an oscillation circuit
27----- an output winding
28----- a capacitor
29----- a diode

**0 066 632**

A list of number in the drawings (contd.)

30----- an output winding
31----- an output winding
32----- a diode
33----- a capacitor
34----- a resistor
35----- a resistor
36,36'-----a changeover switch
37----- a timer
38----- a timer
39----- a switching relay
40----- a driving coil
41----- an interrupter
42----- a power circuit
43----- an oscillation stopping device
44----- an oscillation stopping device
45----- an oscillation stopping device
46----- a start switch
47----- a relay
48----- a display lamp
49----- a display lamp
50----- a display lamp
51----- a timer knob
52----- a contact
53------ a start button
54----- a timer knob
55,55'-----a contact
56----- an operational amplifier
57----- an operational amplifier
58----- an operational amplifier
59----- a capacitor
60----- a resistor
61----- a knob
62----- a variable resistor
63----- a shaft
64----- a cam
65----- a switch

9

# 0 066 632

A list of number in the drawings (contd.)

```
66----- a cam
67----- a transistor
68----- a hole
69----- a leg
70----- a capacitor
```